# EUROPEAN PATENT APPLICATION

(11) **EP 4 734 241 A2**
(43) Date of publication of application: **29.04.2026**
(21) Application number: 25209401.6
(22) Date of filing: 17.10.2025
(51) Int. Cl.: H01M 50/107, H01M 50/119, H01M 50/124, H01M 50/133

(54) **SECONDARY BATTERY, BATTERY PACK, AND ELECTRONIC DEVICE**

(30) Priority: 28.10.2024 CN 202411516759
(71) Applicant: AESC Japan Ltd., Yokohama-shi, Kanagawa 220-0012 (JP)
(72) Inventor: YANG, Yaping, Jiangyin City, Wuxi City, 214443 (CN)
(74) Representative: Becker, Eberhard

(57) **Abstract**

The disclosure provides a secondary battery (100), a battery pack (10), and an electronic device (1). The secondary battery (100) includes a housing (110) and an electrode assembly (120); the housing (110) includes an end wall (111) and a sidewall (112) surrounding the end wall (111), the sidewall (112) and the end wall (111) are integrally formed by stretching; the electrode assembly (120) is accommodated in the housing (110); wherein a wall thickness of the end wall (111) is a, a wall thickness of the sidewall (112) is b, 1 < a/b < 3, and the technical issue of battery performance degradation caused by uneven side pressure of the housing (110) on the electrode assembly (120) may be alleviated.

## Description

### BACKGROUND OF THE INVENTION

### Field of the Invention

The disclosure relates to the technical field of batteries, and in particular to a secondary battery, a battery pack, and an electronic device.

### Description of Related Art

At present, cylindrical batteries are widely used in various industries due to advantages such as mature production technique, high yield rate, low processing cost, good safety performance, and heat dissipation performance.

In order to increase the capacity density of the battery housing, the current manufacturing process is committed to making the sidewall of the housing as thin as possible, thereby providing more accommodation space for the active material inside the battery, and thereby increasing the energy density of the battery. However, this pursuit of thin sidewall reduces the cylindricity of the housing. The reduction in the cylindricity of the housing is reflected in the fluctuation of the axial diameter of the housing, resulting in uneven side pressure on the electrode assembly, causing degradation of battery performance and affecting the consistency of the battery.

### SUMMARY OF THE INVENTION

The disclosure provides a secondary battery, a battery pack, and an electronic device to alleviate the technical issue that the battery performance is deteriorated due to the uneven side pressure of the housing on the electrode assembly.

To achieve the above object and other related objects, the disclosure provides a secondary battery, a battery pack, and an electronic device. The secondary battery includes a housing and an electrode assembly; the housing includes an end wall and a sidewall surrounding the end wall, and the sidewall and the end wall are integrally formed by stretching; the electrode assembly is accommodated in the housing; a wall thickness of the end wall is a, a wall thickness of the sidewall is b, and 1 <a/b<3.

In the above technical solution, the end wall is not stretched or is stretched to a very small extent, so the wall thickness of the end wall is approximately equal to the thickness of the raw material. By limiting the ratio between the wall thickness of the end wall and the wall thickness of the sidewall within the range of 1 < a/b < 3, the radial dimension of the housing perpendicular to the stretching direction along the height direction of the housing is not fluctuated too much during the gradual thinning process of the housing during multiple stretching, which is beneficial to the consistency of the finished housing. In addition, the housing may exert a more uniform pressure on the side of the electrode assembly to optimize the performance of the secondary battery.

In an example of the secondary battery of the invention, 1.3≤a/b≤2.

In the above technical solution, 1.3≤a/b≤2 is further limited, which may not only further reduce the amount of fluctuation of the radial dimension of the housing along the height direction of the housing, but also is beneficial to the balance of the strength and the weight of the housing, so as to achieve the effect of both lightweight and high strength of the housing, thereby improving the safety of the battery.

In an example of the secondary battery of the invention, the secondary battery is a cylindrical battery, a diameter of the end wall 111 is D, a height of the sidewall 112 is L, and 1.5≤L/D≤3.5.

In the above technical solution, the limitation of 1.5≤L/D≤3.5 is beneficial to the balance between the capacity and the cylindricity of the housing, and may achieve the effect of both higher capacity and higher cylindricity of the housing, thereby improving the consistency of the battery.

In an example of the secondary battery of the invention, a diameter of the end wall is in a range of 30 mm≤D≤50 mm.

In the above technical solution, the limitation of 30 mm≤D≤50 mm may achieve that the housing has a larger capacity and meets the strength requirements of the electrode assembly for the housing, so as to improve the safety performance of the battery.

In an example of the secondary battery of the invention, the secondary battery is a cylindrical battery, and a tolerance of a diameter of the housing is less than or equal to 0.07 mm.

In the above technical solution, by limiting the tolerance of the diameter of the housing, the housing may have higher assembly accuracy and sealing performance and more uniform pressure at the side of the electrode assembly, thereby improving the assembly efficiency and the safety of the secondary battery.

In an example of the secondary battery of the invention, the secondary battery is a cylindrical battery, and a roundness of the housing is less than or equal to 0.09 mm.

In the above technical solution, the definition of the roundness of the housing may achieve better consistency of the housing, more uniform pressure at the side of the electrode assembly, optimize thermal management efficiency, and improve sealing performance, thereby improving the safety and the reliability of the housing.

In an example of the secondary battery of the invention, the electrode assembly includes a winding body formed by stacking and winding a positive electrode sheet, a negative electrode sheet, and a separator, a winding axis of the winding body is perpendicular to the end wall, the negative electrode sheet is coated with a negative electrode active material layer thereon, a Si content in the negative electrode active material layer is greater than 2%, and a Vickers hardness of the sidewall is greater than or equal to 160 HV.

In the above technical solution, the Vickers hardness of the sidewall is greater than or equal to 160 HV to provide better structural support to protect the internal assemblies of the battery from external impact and pressure, reduce the deformation of the sidewall during battery charging and discharging, better resist internal pressure, and also achieve high wear resistance at the same time.

In an example of the secondary battery of the invention, the secondary battery further includes a pole, an electrode terminal hole is disposed on the end wall, the pole passes through the electrode terminal hole and is insulated from and fixed to the end wall, the pole is electrically connected to the positive electrode sheet, and a Vickers hardness of the end wall is greater than 100 HV and less than 150 HV.

In the above technical solution, the Vickers hardness of the end wall is greater than the limit of 100 HV, so that the end wall has sufficient hardness to provide better structural support, and is less than the limit of 150 HV, so that the hardness of the end wall is less than the hardness of the sidewall. When the internal pressure of the battery is too high, deformation is more likely to occur at the end wall, thus helping to guide the pressure to be released via the pole being detached from the electrode terminal hole at the end wall, thereby improving the safety performance of the battery.

In an example of the secondary battery of the invention, the housing is electrically connected to the negative electrode sheet, an outer side of the end wall is used for welding with an external busbar, a first nickel-plated layer is disposed at an outer side of the housing, and a thickness of the first nickel-plated layer located at the end wall is greater than a thickness of the first nickel-plated layer located at the sidewall.

In the above technical solution, the first nickel-plated layer may improve the performance of corrosion resistance, wear resistance, and rust resistance of the outer side of the housing, and may also enhance the surface hardness of the housing, thus helping to protect the internal assemblies of the battery. The first nickel-plated layer may also improve the welding performance of the housing, which is beneficial for welding connections with other external assemblies. The outer side of the end wall is used for welding with the external busbar. The configuration of the greater thickness of the first nickel-plated layer located at the end wall may play a role in improving soldering and may also improve the corrosion resistance, rust resistance, and wear resistance performance of the first nickel-plated layer, so as to help the end wall adapt to complex working conditions; the configuration of smaller thickness of the first nickel-plated layer located at the sidewall may reduce costs under the premise of meeting the corrosion resistance, rust resistance, and wear resistance performance, and may also prevent the first nickel-plated layer from partially peeling off when worn and resulting in issues such as uneven thickness or even local corrosion.

In an example of the secondary battery of the invention, the thickness of the first nickel-plated layer located at the end wall is c, and the thickness of the first nickel-plated layer located at the sidewall is d, 1 < c/d < 3.

In the above technical solution, by limiting the ratio between the first nickel-plated layer located at the end wall and the first nickel-plated layer located at the sidewall to satisfy 1 < c/d < 3, the corrosion resistance, rust resistance, and wear resistance performance of the first nickel-plated layer is further optimized. In addition, when adopting a pre-nickel-plating process, the stretching ratio of the first nickel-plated layer located at the sidewall may also be limited to not be too high, thereby reducing the possibility of the first nickel-plated layer being broken, preventing pitting corrosion, and thereby improving the corrosion resistance and the wear resistance of the first nickel-plated layer.

In an example of the secondary battery of the invention, the thickness of the first nickel-plated layer located at the end wall is in a range of 4 *µ*m to 5 *µ*m, and the thickness of the first nickel-plated layer located at the sidewall is in a range of 2 *µ*m to 4 *µ*m.

In the above technical solution, the thickness range of the first nickel-plated layer located at the end wall and the first nickel-plated layer located at the sidewall is further limited, and the corrosion resistance, anti-rust, and wear-resistant performance of the first nickel-plated layer is further optimized, and costs are reduced under the premise of satisfying the corrosion resistance, anti-rust, and wear-resistant performance.

In an example of the secondary battery of the invention, an insulating member isolating the end wall and the electrode assembly is disposed between the end wall and the electrode assembly, a second nickel-plated layer is disposed at an inner side of the housing, and a thickness of the second nickel-plated layer located at the end wall is greater than a thickness of the second nickel-plated layer located at the sidewall.

In the above technical solution, the second nickel-plated layer located at the end wall is set to be thicker to overcome the liquid phase corrosion caused by the residual electrolyte between the end wall and the insulating member. The second nickel-plated layer located at the sidewall is set to be thinner. On the one hand, costs may be reduced under the premise of meeting corrosion resistance, rust resistance, and wear resistance performance. On the other hand, the amount of the first nickel-plated layer peeling off may be reduced to improve the corrosion resistance of the second nickel-plated layer and improve the safety performance of the battery.

In an example of the secondary battery of the invention, the thickness of the second nickel-plated layer located at the end wall is e, and the thickness of the second nickel-plated layer located at the sidewall is f, 1 < e/f< 3.

In the above technical solution, by limiting the ratio between the second nickel-plated layer located at the end wall and the second nickel-plated layer located at the sidewall to satisfy 1 <e/f<3, the corrosion resistance, rust resistance, and wear resistance performance of the second nickel-plated layer is further optimized. In addition, when adopting a pre-nickel-plating process, the stretching ratio of the second nickel-plated layer located at the sidewall may also be limited to not be too high, thereby reducing the possibility of the second nickel-plated layer being broken, preventing pitting corrosion, and thereby improving the corrosion resistance and the wear resistance of the first nickel-plated layer.

In an example of the secondary battery of the invention, a thickness range of the second nickel-plated layer located at the end wall is of 2 *µ*m to 3 *µ*m, and a thickness range of the second nickel-plated layer located at the sidewall is of 1 *µ*m to 2 *µ*m.

In the above technical solution, the thickness range of the second nickel-plated layer located at the end wall and the second nickel-plated layer located at the sidewall is further limited, the corrosion resistance performance of the second nickel-plated layer is further optimized, and costs are reduced under the premise of satisfying the corrosion resistance performance.

In an example of the secondary battery of the invention, along a same thickness direction of the housing, the thickness of the first nickel-plated layer is greater than the thickness of the second nickel-plated layer.

In the above technical solution, the configuration of greater thickness of the first nickel-plated layer located at the outside of the housing may improve the effects of wear resistance, corrosion resistance, and rust resistance of the outside of the housing, so that the housing may adapt to complex external working conditions; the configuration of smaller thickness of the second nickel-plated layer located at the inside of the housing may reduce the risk of nickel peeling off. If metal powder remains inside the battery, micro short circuit may occur, thus increasing the risk of thermal runaway of the battery. The configuration may further improve the safety performance of the battery under the premise of achieving the corrosion resistance effect of the inside of the housing.

In an example of the secondary battery of the invention, the end wall and the sidewall are connected via a transition portion, the transition portion includes a first rounded corner connected to an outer surface of the end wall and an outer surface of the sidewall and a second rounded corner connected to an inner surface of the end wall and an inner surface of the sidewall, a radius of the first rounded corner is r1, and a radius of the second rounded corner is r2, and r1/a>1, r2/a≥1.

In the above technical solution, the configuration of the transition portion and the limitation of r1/a≥1, r2/a≥1 may achieve a smooth transition from the end wall to the sidewall. On the one hand, tensile fracture caused by a sharp transition may be prevented. On the other hand, when a pre-nickel-plating process is adopted, peeling of the nickel-plated layer during the stretching process of the sidewall may also be reduced. Still further, the stress concentration at the corners of the end wall and the sidewall may also be alleviated.

In an example of the secondary battery of the invention, 0.8≤(r1-r2)/a≤0.95.

In the above technical solution, the ratio of the transition portion thickness to the end wall thickness is limited to the above range to achieve a slow transition between the end wall and the transition portion. On the one hand, tensile fracture caused by drastic transition may be prevented. On the other hand, when using a pre-nickel-plating process, peeling of the nickel-plated layer during the stretching process of the sidewall may also be reduced.

In an example of the secondary battery of the invention, the transition portion is gradually stretched along an axial direction of the sidewall from an inner surface of the end wall facing an inside of the housing to be equal to a wall thickness of the sidewall, and a stretching height of the transition portion is h, 0.5≤r1/h≤1.

In the above technical solution, the ratio of the radius of the first rounded corner to the stretching height is limited to 0.5≤r1/h≤1. r1/h≥0.5 may achieve a smooth transition from the end wall to the sidewall. On the one hand, tensile fracture caused by a sharp transition may be prevented. On the other hand, when a pre-nickel-plating process is adopted, peeling of the nickel-plated layer during the stretching process of the sidewall may also be reduced. Still further, the stress concentration at the corners of the end wall and the sidewall may also be alleviated. The limitation of R1/h≤1 may prevent the situation in which internal assemblies of the battery interfere with the transition portion when entering the housing.

In an example of the secondary battery of the invention, 1 mm≤r1≤1.5 mm, 1 mm≤h≤2 mm.

In the above technical solution, the first rounded corner radius and the stretching height are within the above range to achieve a smooth transition from the end wall to the sidewall on the one hand, and prevent the situation in which the internal assemblies of the battery interfere with the transition portion when entering the housing on the other hand.

In an example of the secondary battery of the invention, the electrode assembly includes a winding body formed by stacking and winding a positive electrode sheet, a negative electrode sheet, and a separator, the positive electrode sheet includes a first coating region coated with a positive electrode active material and a first uncoated region not coated with the positive electrode active material, the negative electrode sheet includes a second coating region coated with a negative electrode active material and a second uncoated region not coated with the negative electrode active material, along an axial direction of the electrode assembly, the electrode assembly includes a reaction region and two non-reaction regions respectively located at two sides of the reaction region, the reaction region is a portion in which the first coating region and the second coating region are overlapped along a radial direction of the electrode assembly, the non-reaction regions are portions in which only the first coating region or only the second coating region is present, and a distance from a boundary line between the non-reaction regions and the reaction region close to a side of the end wall to the inner side of the end wall is g, and g≥h.

In the above technical solution, during the battery charging and discharging process, since the first coating region and the second coating region in the reaction region of the electrode assembly are overlapped along the radial direction of the electrode assembly, the reaction region is expanded cumulatively in the radial direction, and the expansion force is greater, resulting in a greater pressure to the sidewall. However, the non-reaction regions of the electrode assembly are not expanded due to having only the first coating region or the second coating region. Therefore, the distance from the boundary line between the non-reaction regions and the reaction region to the inner side of the end wall is limited to be greater than the stretching height of the transition portion, so that the reaction region is not overlapped with the transition portion, that is, located at a place where the wall thickness of the sidewall is more uniform to prevent the reaction region from being pressed against the transition portion first when expanding and causing the housing to break at the transition portion. At the same time, the pressure acting on the sidewall when the electrode assembly is expanded may be uniform, thereby improving the safety performance of the battery.

In an example of the secondary battery of the invention, the housing is a steel housing.

In the above technical solution, the steel housing has excellent performance in wear resistance, corrosion resistance, dust resistance, and water resistance, and may provide better protection function.

In an example of the secondary battery of the invention, an end of the sidewall away from the end wall has an opening, an end of the sidewall close to the opening includes a rolling groove recessed toward an inside of the housing, the rolling groove forms a protrusion at an inside of the sidewall, and an open end of the sidewall is bent toward a center of the housing to form a flange; and the secondary battery further includes an end cover, and the end cover is sealed and mounted between the protrusion and the flange.

In the above technical solution, the end cover is sealed and mounted by a rolling groove, which is beneficial to improving the sealing strength, improving the production efficiency, improving the sealing performance, and improving the energy density of the battery.

The invention also provides a battery pack including any of the above secondary batteries.

The invention further provides an electronic device including the above battery pack.

In the secondary battery of the invention, the end wall is not stretched or is stretched to a very small extent, so the wall thickness of the end wall is approximately equal to the thickness of the raw material. By limiting the ratio between the wall thickness of the end wall and the wall thickness of the sidewall within the range of 1 < a/b < 3, the radial dimension of the housing perpendicular to the stretching direction along the height direction of the housing is not fluctuated too much during the gradual thinning process of the housing during multiple stretching, which is beneficial to the consistency of the finished housing. In addition, the housing may exert a more uniform pressure on the side of the electrode assembly to optimize the performance of the secondary battery.

### BRIEF DESCRIPTION OF THE DRAWINGS

In order to more clearly explain the technical solutions in the embodiments of the disclosure or prior art, the following briefly introduces the figures needed in the description of the embodiments or prior art. Obviously, the figures in the following description are only some embodiments of the disclosure. For those of ordinary skill in the art, without inventive-step effort, other embodiments may be obtained based on these figures.
FIG. 1 is a schematic structural diagram of an embodiment of a secondary battery of the disclosure.
FIG. 2 is a schematic structural diagram of a housing of an embodiment of a secondary battery of the disclosure.
FIG. 3 is a partial enlarged view at A in FIG. 1.
FIG. 4 is a single value diagram of the diameter of a housing at different positions.
FIG. 5 is a cross-sectional view of an electrode assembly in an embodiment of a secondary battery of the disclosure.
FIG. 6 is a partial enlarged view of the housing portion at B in FIG. 2.
FIG. 7 is a schematic diagram of an embodiment of a battery pack of the disclosure.
FIG. 8 is a schematic diagram of an embodiment of an electronic device of the disclosure.
FIG. 9 is a schematic structural diagram of a square housing battery in an embodiment of a secondary battery of the disclosure.
FIG. 10 is a cross-sectional view of a square housing battery in an embodiment of a secondary battery of the disclosure.

### DESCRIPTION OF THE EMBODIMENTS

It should be noted that terms such as "upper", "lower", "left", "right", "middle", and "one" recited in the specification are only for the convenience of description and are not used to limit the scope of implementation of the disclosure. Changes or adjustments to relative relationships thereof should be regarded as the scope of implementation of the disclosure without substantially changing the technical content.

A secondary battery includes an electrode assembly. The electrode assembly is a component in the secondary battery in which an electrochemical reaction occurs, and may include one or more electrode assemblies.

The secondary battery further includes a housing, an end cover, and an electrode terminal. The housing includes an end wall and a sidewall surrounding the end wall. The end wall and the sidewall are integrally formed by stretching. One end of the sidewall has an opening. The electrode assembly may be assembled into the housing via the opening of the housing. The end cover is used to cover the opening of the housing to achieve sealing. The electrode terminal passes through the end wall and is electrically connected to the electrode assembly to conduct the electrical energy generated by the electrode assembly.

The secondary battery uses a structure in which an electrode assembly is assembled with a steel housing. The housing is used to isolate the external environment and protect the electrochemical reaction of the internal active material. At the same time, the sidewall of the housing has a greater restraining effect on the radial expansion of the electrode assembly. As the requirements for battery performance are increased, in order to increase the capacity density of the steel housing, the current manufacturing process is committed to making the sidewall of the steel housing as thin as possible. This design may reduce the weight of the steel housing, thereby freeing up more space for the active material inside the battery, and thereby increasing the energy density of the battery.

However, the inventors discovered that this pursuit of a thin sidewall may also bring some potential issues, especially since the sidewall and the end wall are integrally formed by stretching. As the stretching ratio is increased, the thickness of the housing sidewall relative to the end wall is gradually decreased. Along the height direction of the housing, the fluctuation of the radial dimension of the housing perpendicular to the stretching direction is increased, causing uneven lateral pressure of the housing on the electrode assembly, resulting in degradation of battery performance and affecting the consistency of the battery. Therefore, during the design and the manufacturing process, a balance between increasing the capacity density and ensuring sufficient radial dimensions of the housing needs to be found.

Accordingly, the disclosure provides a technical solution. During the stretching process of the housing, by controlling the stretching ratio of the end wall and the sidewall within the range of 1 < a/b < 3, the radial dimension of the housing perpendicular to the stretching direction along the height direction of the housing is not fluctuated too much during the gradual thinning process of the housing during multiple stretching, which is beneficial to the consistency of the finished housing and makes the housing have a more uniform pressure at the side of the electrode assembly.

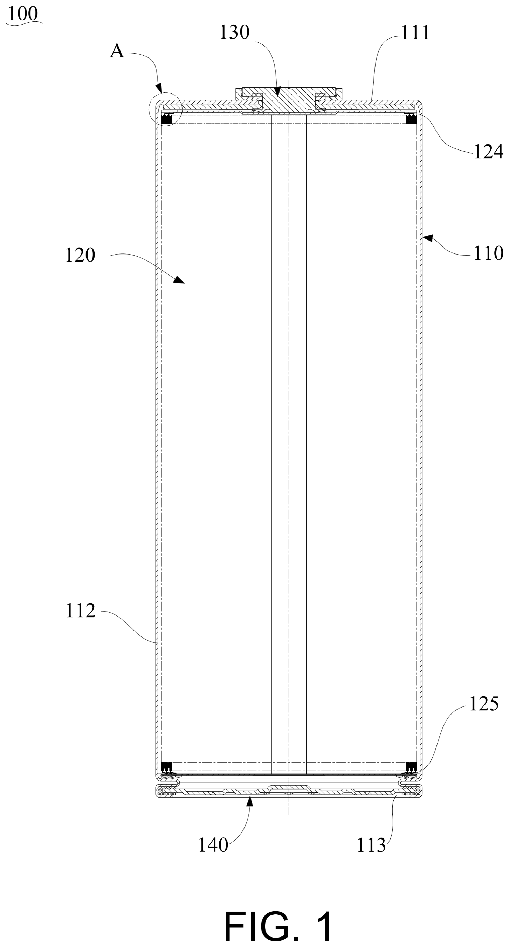

Please refer to FIG. 1 to FIG. 10. The disclosure provides a secondary battery 100. The secondary battery 100 includes a housing 110, an electrode assembly 120, an electrode terminal 130, and an end cover 140.

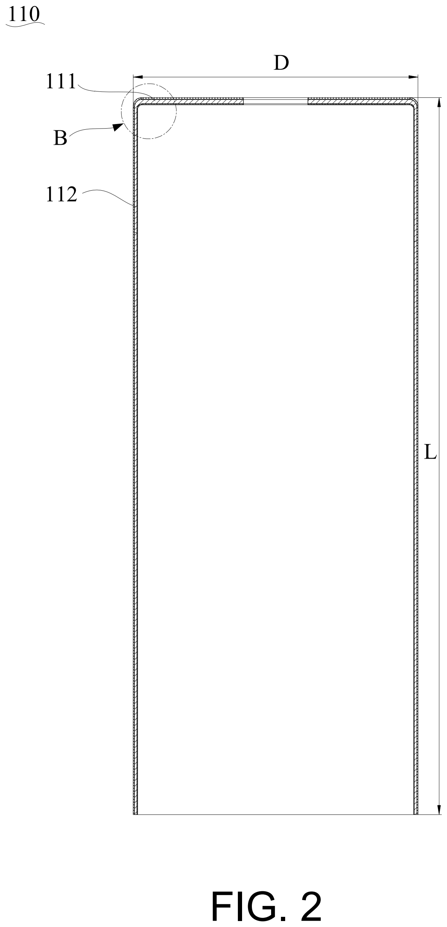

Please refer to FIG. 1 and FIG. 2. The housing 110 includes an end wall 111 and a sidewall 112 surrounding the end wall 111. The sidewall 112 and the end wall 111 are integrally formed by stretching. The stretching process is a stamping processing method using a stretching die to press a sheet blank into a hollow member of various openings 113. Specifically, in the present embodiment, a suitable die is first selected according to the target shape of the housing 110. For example, the shape of the housing 110 may be a square housing, a cylindrical housing, or a polygonal prismatic housing, etc., and then the blank is stamped. The first step is to stamp out the prototype of the end wall 111, the sidewall 112, and the cavity. In order to ensure the reliability of stretching and avoid stretching fracture, it is desirable to replace dies of different sizes multiple times and stamp multiple times until stretched to a preset size.

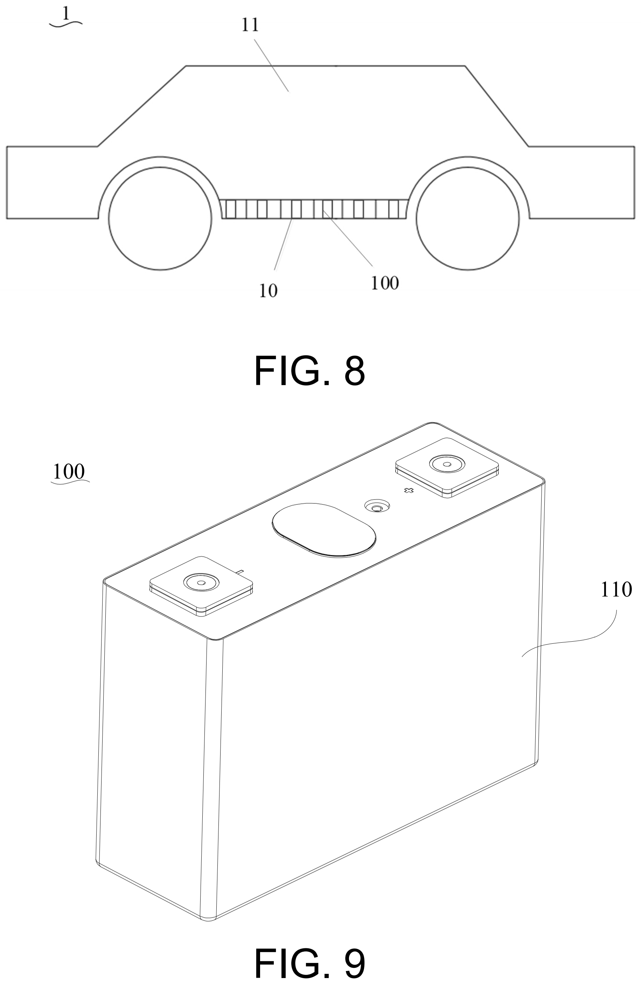

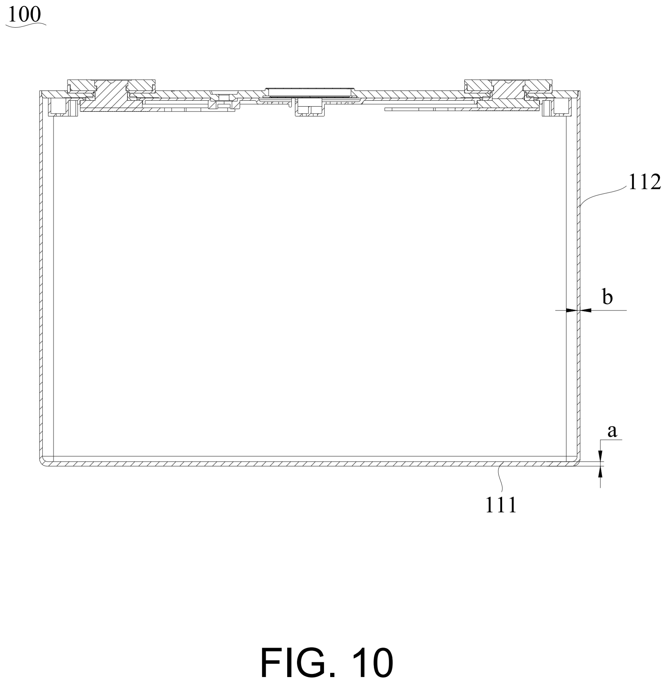

In some embodiments, the shape of the housing 110 may be a square housing, please refer to FIG. 9 and FIG. 10; in the present embodiment, please refer to FIG. 1, the outer edge of the end wall 111 is circular, the sidewall 112 is cylindrical and surrounds the outer edge of the end wall 111, and a circular opening 113 is formed at the end of the sidewall 112 away from the end wall 111. A receiving cavity is formed in the housing 110 surrounded by the end wall 111 and the sidewall 112 for receiving the electrode assembly 120, the electrolyte, and other desired components of the battery. Specifically, the diameter of the housing 110 may be determined according to the specific size of the electrode assembly 120, such as 18 mm, 21 mm, 46 mm, etc. The material of the housing 110 may be a variety, such as copper, iron, aluminum, steel, aluminum alloy, etc. In order to prevent the housing 110 from rusting during long-term use, a layer of rustproof material such as metal nickel may further be plated at the surface of the housing 110.

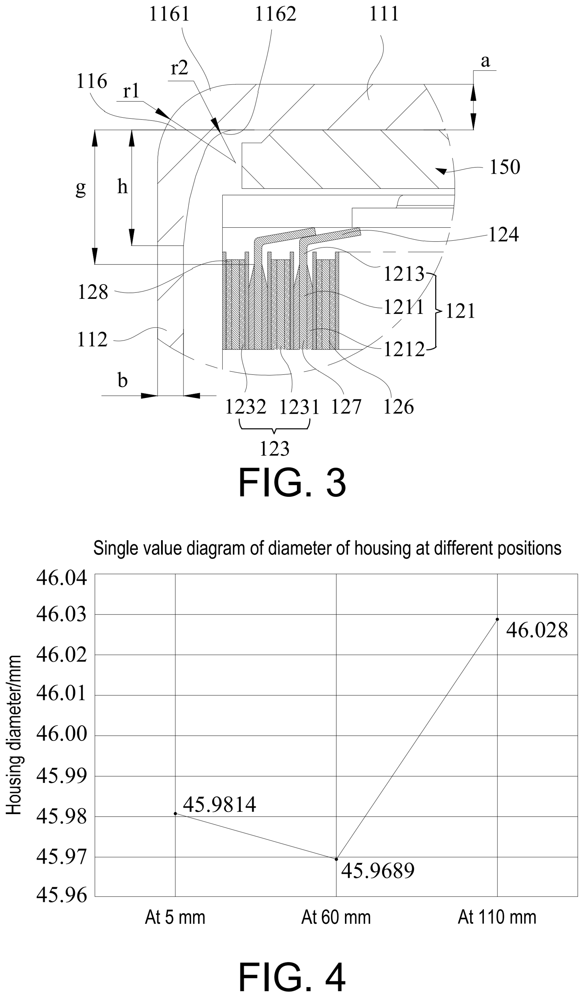

Please refer to FIG. 2 and FIG. 3. In the present embodiment, the end wall 111 is only formed by stamping in the first step, and no subsequent stretching is performed. Therefore, the wall thickness of the end wall 111 is approximately equal to the thickness of the raw material, i.e., the blank, and the sidewall 112 needs to be stamped multiple times until stretched to a preset size. Specifically, the wall thickness of the end wall 111 is a, and the wall thickness of the sidewall 112 is b. It should be noted that during stamping and stretching, a sudden change in size is likely to cause issues such as stress concentration, a reduction in elongation at break, and a reduction in structural strength. Therefore, the size of the housing 110 is usually variable thickness. In the present embodiment, the wall thickness a of the end wall 111 is measured as follows: first, 5 points are taken on the circumference of 1/2 diameter of the end wall 111 to measure the thickness respectively, and then the average value of the 5 values is obtained; the wall thickness b of the sidewall 112 is measured as follows: first, the thickness at 1/3 height, 1/2 height, and 2/3 height of the sidewall 112 is measured respectively, specifically, 5 points are taken on the circumference of each height to measure the thickness respectively, then the average value is obtained to obtain the thickness at each height, and then the average value of the thickness at these three heights is obtained.

The inventors found that during the stamping and stretching process of the housing 110, due to the greater constraint at the bottom of the stamping die, the size of the bottom is more stable, and the middle portion has no strong constraint and experiences concave phenomenon during the stamping process, as shown in FIG. 4. FIG. 4 takes a cylindrical battery with a diameter of 46 mm and a height of 120 mm as an example. The diameter values of the housing 110 at 5 mm, 60 mm, and 115 mm from the opening 113 respectively show that the diameter of the middle portion of the housing 110 is less than the diameter at two ends of the housing 110. Furthermore, if the stretching ratio of the sidewall 112 is greater, the cumulative amount of the concave is greater, resulting in uneven diameter of the housing 110, thus affecting the consistency of the housing 110. Therefore, the ratio range of the end wall 111 and the wall thickness is limited to: 1 < a/b < 3 to limit the stretching ratio of the sidewall 112 to not be too high, so that the diameter and the cylindricity of the housing 110 are not fluctuated too much during the gradual thinning process of multiple stretching, which is beneficial to the consistency of the finished housing 110, and makes the housing 110 have a more uniform pressure at the side of the electrode assembly 120, so as to optimize the performance of the secondary battery 100.

Referring to FIG. 1, FIG. 3, and FIG. 5, the electrode assembly 120 is accommodated in the housing 110, and the electrode assembly 120 is a component in the secondary battery 100 in which an electrochemical reaction occurs. One or a plurality of electrode assemblies 120 may be contained within the housing 110. The electrode assembly 120 includes a layered body 126 formed by layering a positive electrode sheet 121, a negative electrode sheet 123, and a separator 122. Specifically, the positive electrode sheet 121 includes a positive electrode collector 1211 and a positive electrode active material, and the positive electrode active material is coated at the surface of the positive electrode collector 1211; the positive electrode collector 1211 includes a first coated region 1212 coated with an active material and a first uncoated region 1213 not coated with the active material, and the first uncoated region 1213 is located at the end of the positive electrode sheet 121, and another end of the first uncoated region 1213 along the layering axis direction of the electrode assembly 120 is extended out of the separator 122 and bent toward the layering axis to form a positive electrode tab 124. The negative electrode sheet 123 includes a negative electrode collector 1231 and a negative electrode active material, and the negative electrode active material is coated at the surface of the negative electrode collector 1231; the negative electrode collector 1231 includes a second coated region 1232 coated with the active material and a second uncoated region 1233 not coated with the active material, and the second uncoated region 1233 is located at the end of the negative electrode sheet 123, and the second uncoated region 1233 is extended out of the separator 122 along the layering axis direction of the electrode assembly 120 and bent toward the layering axis to form a negative electrode tab 125.

Referring to FIG. 1, FIG. 3, and FIG. 5, the separator 122 is disposed between the positive electrode sheet 121 and the negative electrode sheet 123 to separate the positive electrode active material layer from the negative electrode active material layer. Taking the lithium-ion secondary battery 100 as an example, the material of the positive electrode current collector 1211 may be aluminum, and the positive electrode active material layer includes a positive electrode active material. The positive electrode active material may be lithium cobalt oxide, lithium iron phosphate, ternary lithium, or lithium manganese oxide, etc. The material of the negative electrode current collector 1231 may be copper. The negative electrode active material layer includes a negative electrode active material. The negative electrode active material may be carbon or silicon, etc. The base material of the separator 122 may be polypropylene (PP for short) or polyethylene (PE for short), etc. In order to protect and insulate the electrode assembly 120, an insulating film may be coated on the outside of the electrode assembly 120. The insulating film may be synthesized from PP, PE, polyethylene terephthalate (PET), polyvinyl chloride (PVC), or other high molecular polymer materials.

Referring to FIG. 1, FIG. 3, and FIG. 5, furthermore, the positive electrode tab 125 in the disclosure faces the end wall 111 or the opening 113, and the negative electrode tab 125 faces another end of the housing 110. In the present embodiment, the positive electrode tab 124 faces the end wall 111 and is electrically connected to the electrode terminal 130 so that the electrode terminal 130 is positively charged, and the negative electrode tab 125 faces the opening 113, and the housing 110 is electrically connected to the negative electrode tab 125 to be negatively charged. However, in other embodiments, the negative electrode tab 125 may also be connected to the electrode terminal 130, and the positive electrode tab 124 may be connected to the housing 110.

Please refer to FIG. 1. In the present embodiment, the secondary battery 100 further includes the electrode terminal 130. Specifically, the electrode terminal 130 passes through the end wall 111 and is insulated from the end wall 111. One end of the electrode terminal 130 facing the electrode assembly 120 passes through the end wall 111 to be electrically connected to the positive electrode tab 124 directly or via an indirect transfer. The structural form of the electrode terminal 130 may be any suitable form that may pass through the end wall 111 to be electrically connected to the positive electrode tab 124 of the electrode assembly 120. For example, the cross-section may be circular, square, prismatic, or a special-shaped contour that may achieve stable conductivity. The hole of the electrode terminal 130 corresponds to the shape of the electrode terminal 130. In the present embodiment, the cross-section of the electrode terminal 130 is circular.

Please refer to FIG. 1. In the present embodiment, the secondary battery 100 further includes the end cover 140. The end cover 140 is sealed and mounted at the opening 113. The outer edge shape of the end cover 140 corresponds to the shape of the opening 113, and is connected to the sidewall 112 to seal the opening 113. In a specific embodiment, one end of the sidewall 112 close to the opening 113 includes a rolling groove recessed into the interior of the housing 110, and the rolling groove may limit the axial displacement of the electrode assembly 120. The rolling groove forms a protrusion inside the sidewall 112, and the open end of the sidewall 112 is bent toward the center of the housing 110 to form a flange; the end cover 140 is sealed and mounted between the protrusion and the flange. Specifically, a sealing ring is disposed between the end cover 140 and the sidewall 112, and the edge of the opening 113 is sealed in a manner so that the end cover 140 presses the sealing ring to form a reliable connection.

In the above technical solution, the end cover 140 is sealed and mounted by a rolling groove, which is beneficial to improving the sealing strength, improving the production efficiency, improving the sealing performance, and improving the energy density of the battery.

In an example of the secondary battery 100 of the disclosure, 1.3≤a/b≤2 is further limited, for example, may be 1.3, 1.5, 1.6, 1.7, 1.8, or 2, etc.; the housing 110 meeting this limitation may not only further reduce the amount of fluctuation of the radial dimension of the housing 110, but also, since the greater a/b, the lighter the weight of the housing 110 is at the same radial dimension and height, the more conducive to lightweight and cost reduction, but if a/b is too large, the sidewall 112 is too thin, and breakage is more likely to occur when the secondary battery 100 is subjected to pressure in the height direction or punctured from the side, so the limitation of this range is conducive to the balance between the strength and the weight of the housing 110, so as to achieve the effect of both lightweight and high strength of the housing 110, thereby improving the safety of the battery.

Please refer to FIG. 2. In an example of the secondary battery 100 of the disclosure, the secondary battery 100 is a cylindrical battery. The diameter of the end wall 111 is D, the height of the sidewall 112 is L, and 1.5≤L/D≤3.5. For example, the above may be 1.5, 2, 2.5, 3, or 3.5, etc.; the greater the value of L/D, the greater the height of the housing 110 is under the same diameter, the greater the size of the electrode assembly 120 that may be accommodated, and the greater the battery capacity. However, a greater height also means that the housing 110 is stamped and stretched more times, and the cumulative amount of concave occurring during the stamping process is greater, resulting in uneven diameter of the housing 110, thus reducing the cylindricity of the housing 110 and affecting the consistency of the housing 110. Therefore, the limitation of 1.5≤L/D≤3.5 is conducive to the balance between the capacity and cylindricity of the housing 110, and may achieve the effect of both higher capacity and higher cylindricity of the housing 110, thereby improving the consistency of the battery.

Please refer to FIG. 2, in an example of the secondary battery 100 of the disclosure, the diameter of the end wall 111 is in the range of 30 mm ≤ D ≤ 50 mm. For example, the above may be 30, 32, 36, 40, 42, 46, or 50, etc.; the greater the value of D, the greater the capacity of the corresponding housing 110, and the greater the diameter of the electrode assembly 120 accommodated. However, if D is too high, the diameter of the electrode assembly 120 is too large, thus causing excessive accumulation of the expansion force thereof, and the strength of the housing 110 faces a greater test. In addition, the greater the diameter of the electrode assembly 120, the greater the difficulty of heat dissipation. Therefore, the limitation of 30 mm≤D≤50 mm may result in the housing 110 having a greater capacity and meeting the strength requirements of the electrode assembly 120 for the housing 110 to improve the safety performance of the battery.

Please refer to FIG. 2. In an example of the secondary battery 100 of the disclosure, the secondary battery 100 is a cylindrical battery, and the tolerance of the diameter of the housing 110 is less than or equal to 0.07 mm. By limiting the tolerance of the diameter of the housing 110, the housing 110 may have higher assembly accuracy and sealing performance and more uniform pressure at the side of the electrode assembly 120, thereby improving the assembly efficiency and the safety of the secondary battery 100.

Please refer to FIG. 2, in an example of the secondary battery 100 of the disclosure, the secondary battery 100 is a cylindrical battery, and the roundness of the housing 110 is less than or equal to 0.09 mm. The definition of the roundness of the housing 110 may achieve better consistency of the housing 110, more uniform pressure at the side of the electrode assembly 120, optimize thermal management efficiency, and improve sealing performance, thereby improving the safety and the reliability of the housing 110.

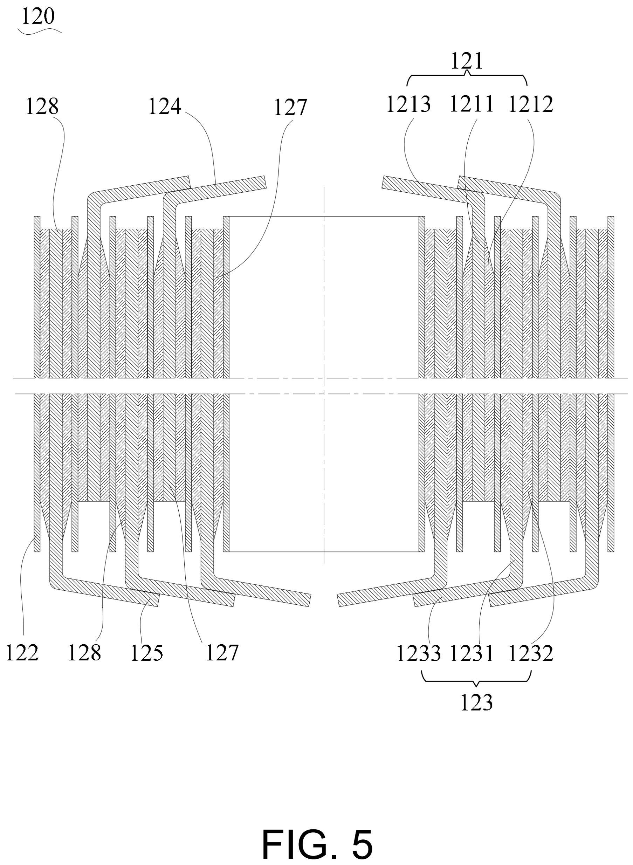

Please refer to FIG. 2 and FIG. 5. In an example of the secondary battery 100 of the disclosure, the electrode assembly 120 includes the positive electrode sheet 121, the negative electrode sheet 123, and the separator 122 stacked and wound to form the layered body 126, the layering axis of the layered body 126 is perpendicular to the end wall 111, and the negative electrode sheet 123 is coated with a negative electrode active material layer. In order to improve the energy density of the secondary battery 100, the Si content in the negative electrode active material layer is greater than 2%. However, the volume of silicon is expanded more significantly during lithiation. Considering that the electrode assembly 120 is expanded cumulatively in the radial direction during charging, the sidewall 112 of the housing 110 plays a key restraining role in the radial expansion of the electrode assembly 120, so the Vickers hardness of the sidewall 112 is limited to be greater than or equal to 160 HV, for example, may be 160 HV, 165 HV, 170 HV, or 180 HV, etc. The sidewall 112 meeting this hardness requirement may provide better structural support for the electrode assembly 120 to protect the internal assemblies of the battery from external impact and pressure, reduce the deformation of the sidewall 112 during battery charge and discharge, better resist internal pressure, and also achieve high wear resistance at the same time. It should be noted that the hardness measuring equipment is a Vickers hardness tester, and the method for measuring the hardness of the sidewall 112 is as follows: first, the hardness of the sidewall 112 at a position about 10 mm away from the end wall 111, the middle of the sidewall 112, and the wall at a position about 5 mm away from the opening 113 is measured respectively, and then the hardness values measured at the above three locations are averaged.

Please refer to FIG. 1 and FIG. 2. In an example of the secondary battery 100 of the disclosure, the secondary battery 100 further includes the electrode terminal 130, the hole of the electrode terminal 130 is disposed on the end wall 111, the electrode terminal 130 passes through the hole of the electrode terminal 130 and is insulated from and fixed to the end wall 111, the electrode terminal 130 is electrically connected to the positive electrode sheet 121, and the Vickers hardness of the end wall 111 is greater than 100 HV and less than 150 HV, and may be, for example, 100 HV, 110 HV, 120 HV, 130 HV, 40 HV, or 150 HV, etc. The Vickers hardness of the end wall 111 is greater than the limit of 100 HV, so that the end wall 111 has sufficient hardness to provide better structural support, and is less than the limit of 150 HV, so that the hardness of the end wall 111 is less than the hardness of the sidewall 112. When the internal pressure of the battery is too high, deformation is more likely to occur at the end wall 111. In case of failure of other pressure relief structures or other extreme situations, the pressure may be better guided to be released via the electrode terminal 130 being detached from the hole of the electrode terminal 130 at the end wall 111, thereby improving the safety performance of the battery. It should be noted that the hardness measurement equipment is a Vickers hardness tester, and the hardness of the end wall 111 is obtained by measuring the hardness value at 1/2 diameter of the end wall 111.

Please refer to FIG. 1, FIG. 2, and FIG. 6. In an example of the secondary battery 100 of the disclosure, the housing 110 is electrically connected to the negative electrode sheet 123, so that the housing 110 serves as a negative electrode output terminal. It may be understood that in the battery pack 10, a plurality of secondary batteries 100 are connected in a series and/or parallel manner, and the positive electrode output terminal and the negative electrode output terminal of the secondary battery 100 are welded and connected according to design requirements via a busbar. Usually, the outer side of the end wall 111 is used for welding with the external busbar. Furthermore, a first nickel-plated layer 114 is disposed at the outer side of the housing 110. The processing technique of the first nickel-plated layer 114 is not limited, and for example, may be forming by nickel plating at the outer side of the housing 110 after stretching is completed; or a pre-nickel plating method may be adopted, that is, before the housing 110 is stretched, nickel is first plated on the blank, and then the housing 110 is stretched. After stretching is completed, the first nickel-plated layer 114 is extended with the stretching of the housing 110 and adhered to the outer side of the housing 110. The first nickel-plated layer 114 not only has the functions of improving the corrosion resistance, the wear resistance, and the rust resistance of the outer side of the housing 110, but also may improve the welding performance of the housing 110.

Please refer to FIG. 1, FIG. 2 and FIG. 6. Since the end wall 111 is a welding surface, preferably, the thickness of the first nickel-plated layer 114 located at the end wall 111 is greater than the thickness of the first nickel-plated layer 114 located at the sidewall 112, so that the first nickel-plated layer 114 located at the end wall 111 has better soldering effect. In addition, in the battery pack 10, the end wall 111 is in direct contact with the outside environment and is often in a complex environment of high temperature and high humidity. Therefore, the end wall 111 has higher requirements for all of the corrosion resistance, the rust resistance, and the wear resistance of the first nickel-plated layer 114. The sidewall 112 is wrapped with an insulating film on the outside, and in the battery pack 10, the sidewall 112 is surrounded by a thermally conductive adhesive or a structural adhesive, so the performance requirements for the first nickel-plated layer 114 are relatively low. In addition, since the sidewall 112 is a curved surface, the first nickel-plated layer 114 on the curved surface has different physical properties from the substrate, and if the thickness is too great, the first nickel-plated layer 114 is readily partially peeled off when worn. Therefore, the configuration of greater thickness of the first nickel-plated layer 114 located at the end wall 111 may improve the corrosion resistance, rust resistance, and wear resistance performance of the first nickel-plated layer 114, so as to help the end wall 111 adapt to complex working conditions; the configuration of smaller thickness of the first nickel-plated layer 114 located at the sidewall 112 may reduce costs under the premise of meeting the corrosion resistance, rust resistance, and wear resistance performance, and may also prevent the first nickel-plated layer 114 from partially peeling off when worn, resulting in issues such as uneven thickness or even local corrosion.

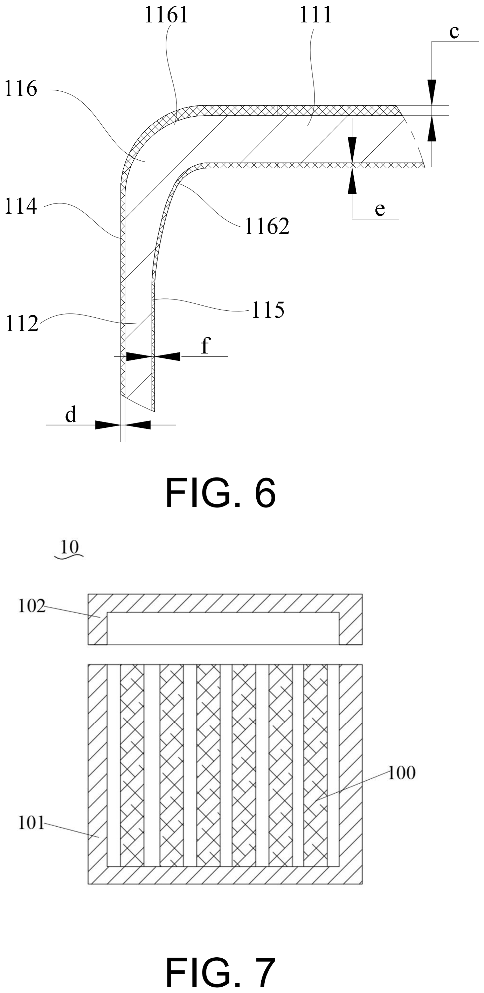

Please refer to FIG. 6, in an example of the secondary battery 100 of the disclosure, the thickness of the first nickel-plated layer 114 located at the end wall 111 is c, and the thickness of the first nickel-plated layer 114 located at the sidewall 112 is d, 1 < c/d < 3, for example, 1.5, 2, 2.5, 2.9, etc. The corrosion resistance, rust resistance, and wear resistance performance of the first nickel-plated layer 114 is further optimized. In addition, when adopting a pre-nickel-plating process, the stretching ratio of the first nickel-plated layer 114 located at the sidewall 112 may also limited to be not too high, thereby reducing the possibility of the first nickel-plated layer 114 being broken, preventing pitting corrosion, and thereby improving the corrosion resistance and the wear resistance of the first nickel-plated layer 114.

Please refer to FIG. 6. It should be noted that the equipment for measuring the thickness of the first nickel-plated layer 114 is a coating thickness gauge. The method for measuring the thickness c of the first nickel-plated layer 114 located at the end wall 111 is as follows: first, 5 points are taken on the circumference of 1/2 diameter of the end wall 111 to measure the thickness of the first nickel-plated layer 114 respectively, and then the average value of the 5 values is obtained; the method for measuring the thickness d of the first nickel-plated layer 114 located at the sidewall 112 is as follows: first, the thickness of the first nickel-plated layer 114 at 1/3 height, 1/2 height, and 2/3 height of the sidewall 112 is measured respectively. Specifically, the thickness of the first nickel-plated layer 114 is measured at 5 points in the circumferential direction at each height, then the average value is calculated to obtain the thickness at each height, and then the average value of the thickness at these three heights is calculated.

Please refer to FIG. 6. In an example of the secondary battery 100 of the disclosure, the thickness of the first nickel-plated layer 114 located at the end wall 111 is in the range of 4 *µ*m to 5 *µ*m, for example, may be 4 *µ*m, 4.2 *µ*m, 4.4 *µ*m, 4.5 *µ*m, 4.8 *µ*m, or 5 *µ*m, etc.; the thickness of the first nickel-plated layer 114 located at the sidewall 112 is in the range of 2 *µ*m to 4 *µ*m, for example, may be 2 *µ*m, 2.2 *µ*m, 2.5 *µ*m, 3 *µ*m, 3.5 *µ*m, or 4 *µ*m, etc. The thickness range of the first nickel-plated layer 114 located at the end wall 111 and the first nickel-plated layer 114 located at the sidewall 112 is further limited, and the corrosion resistance, anti-rust, and wear-resistant performance of the first nickel-plated layer 114 is further optimized, and costs are reduced under the premise of satisfying the corrosion resistance, anti-rust, and wear-resistant performance.

Please refer to FIG. 3 and FIG. 6. In an example of the secondary battery 100 of the disclosure, an insulating member 150 isolating the end wall 111 and the electrode assembly 120 is disposed between the end wall 111 and the electrode assembly 120. The shape and the structure of the insulating member 150 are not limited. For example, in some embodiments, the insulating member 150 may be a lower plastic, and in some other embodiments, the insulating member 150 may be a bottom support plate, as long as the insulation between the end wall 111 and the positive electrode tab 124 of the electrode assembly 120 may be achieved. In order to prevent the housing 110 from reacting with the electrolyte or other chemical substances inside the battery, thereby preventing battery leakage or short circuit due to corrosion and improving battery safety, a second nickel-plated layer 115 is disposed at the inner side of the housing 110. The processing technique of the second nickel-plated layer 115 is not limited, and for example, may be forming by nickel plating at the inner side of the housing 110 after stretching is completed; or a pre-nickel plating method may be adopted, that is, before the housing 110 is stretched, nickel is first plated on the blank, and then the housing 110 is stretched. After stretching is completed, the second nickel-plated layer 115 is extended with the stretching of the housing 110 and adhered to the inner side of the housing 110.

Please refer to FIG. 3 and FIG. 6. Considering that there is a gap between the end wall 111 and the insulating member 150, due to the tension of the liquid, the electrolyte stored between the end wall 111 and the insulating member 150 does not readily flow out, and liquid phase corrosion is readily caused to the inner side of the end wall 111. Therefore, the thickness of the second nickel-plated layer 115 located at the end wall 111 is set to be greater than the thickness of the second nickel-plated layer 115 located at the sidewall 112 to overcome the liquid phase corrosion caused by the residual electrolyte between the end wall 111 and the insulating member 150. In addition, the configuration of less thickness of the second nickel-plated layer 115 located at the sidewall 112 may on the one hand reduce costs under the premise of meeting the requirements of corrosion resistance, rust resistance, and wear resistance performance, and on the other hand, may reduce the amount of the first nickel-plated layer 114 peeling off, thereby improving the corrosion resistance of the second nickel-plated layer 115 and improving the safety performance of the battery.

Please refer to FIG. 6, in an example of the secondary battery 100 of the disclosure, the thickness of the second nickel-plated layer 115 located at the end wall 111 is c, and the thickness of the second nickel-plated layer 115 located at the sidewall 112 is f, 1 < e/f < 3, for example, 1.5, 2, 2.5, 2.9, etc. The corrosion resistance, rust resistance, and wear resistance performance of the second nickel-plated layer 115 is further optimized. In addition, when adopting a pre-nickel-plating process, the stretching ratio of the second nickel-plated layer 115 located at the sidewall 112 may also be limited to not be too high, thereby reducing the possibility of the second nickel-plated layer 115 being broken, preventing pitting corrosion, and thereby improving the corrosion resistance and the wear resistance of the second nickel-plated layer 115.

It should be noted that the equipment for measuring the thickness of the second nickel-plated layer 115 is a coating thickness gauge. The method for measuring the thickness e of the second nickel-plated layer 115 located at the end wall 111 is as follows: first, 5 points are taken on the circumference of 1/2 diameter of the end wall 111 to measure the thickness of the second nickel-plated layer 115 respectively, and then the average value of the 5 values is obtained; the method for measuring the thickness f of the second nickel-plated layer 115 located at the sidewall 112 is as follows: first, the thickness of the second nickel-plated layer 115 at 1/3 height, 1/2 height, and 2/3 height of the sidewall 112 is measured respectively. Specifically, the thickness of the second nickel-plated layer 115 is respectively measured at 5 points in the circumferential direction at each height, then the average value is calculated to obtain the thickness at each height, and then the average value of the thickness at these three heights is calculated.

Please refer to FIG. 6. In an example of the secondary battery 100 of the disclosure, the thickness of the second nickel-plated layer 115 located at the end wall 111 is in the range of 2 *µ*m to 3 *µ*m, for example, may be 2 *µ*m, 2.2 *µ*m, 2.4 *µ*m, 2.5 *µ*m, 2.8 *µ*m, or 3 *µ*m, etc.; the thickness of the second nickel-plated layer 115 located at the sidewall 112 is in the range of 1 *µ*m to 2 *µ*m, for example, may be 1 *µ*m, 1.2 *µ*m, 1.4 *µ*m, 1.5 *µ*m, 1.8 *µ*m, or 2 *µ*m, etc. The thickness ranges of the second nickel-plated layer 115 located at the end wall 111 and the second nickel-plated layer 115 located at the sidewall 112 are further limited, thereby further optimizing the corrosion resistance performance of the second nickel-plated layer 115 and reducing costs under the premise of satisfying corrosion resistance performance.

Please refer to FIG. 6. In an example of the secondary battery 100 of the disclosure, along the same thickness direction of the housing 110, the thickness of the first nickel-plated layer 114 is greater than the thickness of the second nickel-plated layer 115. The configuration of greater thickness of the first nickel-plated layer 114 located at the outside of the housing 110 may improve the effects of wear resistance, corrosion resistance, and rust resistance of the outside of the housing 110, so that the housing 110 may adapt to complex external working conditions; the configuration of smaller thickness of the second nickel-plated layer 115 located at the inside of the housing 110 may reduce the risk of nickel peeling off. If metal powder remains inside the battery, micro short circuit may occur, thus increasing the risk of thermal runaway of the battery. The configuration may further improve the safety performance of the battery under the premise of achieving the corrosion resistance effect of the inside of the housing 110.

Please refer to FIG. 3. When the housing 110 is stamped and stretched, the sudden change in size may readily lead to issues such as stress concentration, reduced elongation at break, and reduced structural strength, especially at the connection between the end wall 111 and the sidewall 112, which is both a corner and has a change in wall thickness. Therefore, in an example of the secondary battery 100 of the disclosure, please refer to FIG. 3, the end wall 111 and the sidewall 112 are connected by a transition portion 116, and the transition portion 116 includes a first rounded corner 1161 connected to the outer surface of the end wall 111 and the outer surface of the sidewall 112 and a second rounded corner 1162 connected to the inner surface of the end wall 111 and the inner surface of the sidewall 112, the radius of the first rounded corner 1161 is r1, the radius of the second rounded corner 1162 is r2, and the ratio of the radius r1 of the first rounded corner 1161 to the wall thickness of the end wall 111 is limited to r1/a≥1, for example, may be: 1, 1.5, 2, 2.5, 3, or 4, etc.; the radius r2 of the second rounded corner 1162 is limited to the range of r2/a≥1, for example, may be: 1, 1.5, 2, 2.5, 3, or 4, etc. It should be noted that the radius r1 of the first rounded corner 1161 and the radius r2 of the second rounded corner 1162 are measured by a profilometer, and the measuring method is: the entire arc surface is scanned using the profilometer, and the radius coinciding with the arc surface is taken, which is the measured rounded corner radius value. This size limitation may achieve a smooth transition from the end wall 111 to the sidewall 112. On the one hand, tensile fracture caused by a sharp transition may be prevented. On the other hand, when a pre-nickel-plating process is adopted, peeling of the nickel-plated layer during the stretching process of the sidewall 112 may also be reduced. Still further, the stress concentration at the corners of the end wall 111 and the sidewall 112 may also be alleviated.

In an example of the secondary battery 100 of the disclosure, referring to FIG. 3, the ratio of the wall thickness formed by the first rounded corner 1161 and the second rounded corner 1162 of the transition portion 116 to the thickness of the end wall 111 is further defined as: 0.8≤(r1-r2)/a≤0.95, and for example, may be: 0.8, 0.85, 0.9, or 0.95, etc. The above ratio is limited to this range to achieve a slow transition between the end wall 111 and the transition portion 116. On the one hand, tensile fracture caused by drastic transition may be prevented. On the other hand, when using a pre-nickel-plating process, peeling of the nickel-plated layer during the stretching process of the sidewall 112 may also be reduced.

In an example of the secondary battery 100 of the disclosure, please refer to FIG. 3, the transition portion 116 is gradually stretched along the axial direction of the sidewall 112 from the inner surface of the end wall 111 facing the inside of the housing 110 to be equal to the wall thickness of the sidewall 112, and the stretching height of the transition portion 116 is h, 0.5≤r1/h≤1, and for example, may be 0.5, 0.6, 0.7, 0.8, 0.9, or 1. The ratio of the radius of the first rounded corner 1161 to the stretching height is limited to 0.5≤r1/h≤1. r1/h≥0.5 may achieve a smooth transition from the end wall 111 to the sidewall 112. On the one hand, tensile fracture caused by a sharp transition may be prevented. On the other hand, when a pre-nickel-plating process is adopted, peeling of the nickel-plated layer during the stretching process of the sidewall 112 may also be reduced. Still further, the stress concentration at the corners of the end wall 111 and the sidewall 112 may also be alleviated. The limitation of r1/h≤1 may prevent the situation in which the internal assemblies of the battery interfere with the transition portion 116 when entering the housing.

Preferably, in an example of the secondary battery 100 of the disclosure, referring to FIG. 3, the range of the radius r1 of the first rounded corner 1161 is further limited to: 1 mm ≤ r1 ≤ 1.5 mm, and the range of the stretching height is limited to: 1 mm ≤ h ≤ 2 mm. This arrangement may achieve a smooth transition from the end wall 111 to the sidewall 112 on the one hand, and may prevent the situation in which internal assemblies of the battery interfere with the transition portion 116 when entering the housing on the other hand.

In an example of the secondary battery 100 of the disclosure, please refer to FIG. 3 and FIG. 5, along the axial direction of the electrode assembly 120, the electrode assembly 120 includes a reaction region 127 and two non-reaction regions 128 respectively located at two sides of the reaction region 127. The reaction region 127 is the portion in which the first coating region 1212 and the second coating region 1232 are overlapped in the radial direction of the electrode assembly 120. During the battery charging and discharging process, since the first coating region 1212 and the second coating region 1232 in the reaction region 127 of the electrode assembly 120 are overlapped in the radial direction of the electrode assembly 120, the reaction region 127 is expanded cumulatively in the radial direction, and the expansion force is greater, thus resulting in a greater pressure to the sidewall 112. The non-reaction regions 128 are portions having only the first coating region 1212 or only the second coating region 1232. It may be understood that the non-reaction region 128 at the side of the positive electrode tab 124 is a portion having only the first coating region 1212, and the non-reaction region 128 at the side of the negative electrode tab 125 is a portion having only the second coating region 1232.

Further, referring to FIG. 3 and FIG. 5, the distance from one boundary line between the non-reaction regions 128 and the reaction region 127 close to the end wall 111 to the inner side of the end wall 111 is defined as g, and g≥h is defined. That is, the distance from the boundary line defining the non-reaction regions 128 and the reaction region 127 to the inner side of the end wall 111 is greater than the stretching height of the transition portion 116. It should be noted that when the positive electrode tab 124 is close to the end wall 111, the non-reaction regions 128 close to the side of the end wall 111 is a portion having only the first coating region 1212, and when the negative electrode tab 125 is close to the end wall 111, the non-reaction region 128 close to the side of the end wall 111 is a portion having only the second coating region 1232; in the present embodiment, the positive electrode tab 124 is close to the end wall 111, and the non-reaction region 128 close to the side of the end wall 111 only has positive electrode active material but no negative electrode active material, so there is no movement of lithium ions at the non-reaction region 128 and no expansion occurs. Therefore, the limitation of g≥h may ensure that the reaction region 127 is not overlapped with the transition portion 116. Even if the reaction region 127 is located at a portion where the wall thickness of the sidewall 112 is more uniform, the reaction region 127 may be prevented from pressing against the transition portion 116 first when expanding and causing the housing 110 to break at the transition portion 116. At the same time, the pressure acting on the sidewall 112 when the electrode assembly 120 is expanded may be ensured to be uniform, thereby improving the safety performance of the battery.

Referring to FIG. 7. The disclosure further provides the battery pack 10. The battery pack 10 includes any of the secondary batteries 100 described above. In an embodiment of the battery pack 10 of the disclosure, the battery pack 10 includes a housing 101, a housing cover 102, and a plurality of secondary batteries 100. The plurality of secondary batteries 100 are placed in the housing 101 and connected in series or in parallel with each other, or a mixture of series and parallel. The housing cover 102 is sealed on the housing 101 to protect the plurality of secondary batteries 100. It should be noted that, in addition to the secondary batteries 100 of the disclosure, the battery pack 10 may also include a portion such as a thermal management system or a circuit board of the battery pack 10. The battery pack 10 may be a battery module or a battery pack, an energy storage cabinet, etc., and are not described one by one here.

Referring to FIG. 8, the disclosure also provides an electronic device 1. The electronic device 1 includes the battery pack 10. A working portion 11 is electrically connected to the battery pack 10 to obtain electrical energy support. As an example, the electronic device 1 is a vehicle, and the vehicle may be a fuel vehicle, a gas vehicle, or a new energy vehicle, and the new energy vehicle may be a pure electric vehicle, a hybrid vehicle, or an extended-range vehicle, etc., but is not limited thereto. The working portion 11 is a vehicle body, and the battery pack 10 is disposed at the bottom of the vehicle body and provides electric energy support for the driving of the vehicle or the operation of electrical elements in the vehicle. However, in some other embodiments, the electronic device 1 may also be a mobile phone, a portable device, a laptop computer, a ship, a spacecraft, an electric toy, an electric tool, and the like. The spacecraft includes an airplane, a rocket, a space shuttle, and a spacecraft, etc.; the working portion 11 may be a unit component that may obtain electrical energy from the battery pack 10 and perform corresponding work, such as a fan blade rotation unit of a fan, a vacuum working unit of a vacuum cleaner, etc. The electric toy includes a fixed or mobile electric toy, such as a game console, an electric car toy, an electric ship toy, and an electric airplane toy, etc.; the electric tool includes a metal cutting electric tool, a grinding electric tool, an assembly electric tool, and a railway electric tool, such as an electric drill, an electric grinder, an electric wrench, an electric screwdriver, an electric hammer, an impact drill, a concrete vibrator, and an electric planer, etc. The embodiments of the present application do not impose any special limitation on the electronic device 1.

In the secondary battery of the invention, the end wall is not stretched or is stretched to a very small extent, so the wall thickness of the end wall is approximately equal to the thickness of the raw material. By limiting the ratio between the wall thickness of the end wall and the wall thickness of the sidewall within the range of 1 < a/b < 3, the radial dimension of the housing perpendicular to the stretching direction along the height direction of the housing is not fluctuated too much during the gradual thinning process of the housing during multiple stretching, which is beneficial to the consistency of the finished housing. In addition, the housing may exert a more uniform pressure on the side of the electrode assembly to optimize the performance of the secondary battery. Therefore, the disclosure effectively overcomes some practical issues in the prior art and has very high utilization value and use significance.

## Claims

1. A secondary battery (100), **characterized in that** the secondary battery (100) comprising:
a housing (110) comprising an end wall (111) and a sidewall (112) surrounding the end wall (111), and the sidewall (112) and the end wall (111) are integrally formed by stretching;
an electrode assembly (120) accommodated in the housing (110);
wherein a wall thickness (a) of the end wall (111) is a, a wall thickness (b) of the sidewall (112) is b, and 1 < a/b < 3.

2. The secondary battery (100) of claim 1, wherein 1.3≤a/b≤2; and/or,
wherein the secondary battery (100) is a cylindrical battery, a diameter of the end wall (111) is D, and a height of the sidewall (112) is L, wherein 1.5≤L/D≤3.5.

3. The secondary battery (100) of claim 1, wherein the secondary battery (100) is a cylindrical battery, and a tolerance of a diameter of the housing (110) is less than or equal to 0.07 mm; and/or,
wherein the secondary battery (100) is a cylindrical battery, and a roundness of the housing (110) is less than or equal to 0.09 mm.

4. The secondary battery (100) of claim 1, wherein the electrode assembly (120) comprises a layered body (126) formed by layering a positive electrode sheet (121), a negative electrode sheet (123), and a separator (122), a layering axis of the layered body (126) is perpendicular to the end wall (111), the negative electrode sheet (123) is coated with a negative electrode active material layer thereon, a Si content in the negative electrode active material layer is greater than 2%, and a Vickers hardness of the sidewall (112) is greater than or equal to 160 HV.

5. The secondary battery (100) of claim 4, wherein the secondary battery (100) further comprises an electrode terminal (130), an electrode terminal hole is disposed on the end wall (111), the electrode terminal (130) passes through the electrode terminal hole and is insulated from and fixed to the end wall (111), the electrode terminal (130) is electrically connected to the positive electrode sheet (121), and a Vickers hardness of the end wall (111) is greater than 100 HV and less than 150 HV.

6. The secondary battery (100) of claim 5, wherein the housing (110) is electrically connected to the negative electrode sheet (123), an outer side of the end wall (111) is used for welding with an external busbar, a first nickel-plated layer (114) is disposed at an outer side of the housing (110), and a thickness of the first nickel-plated layer (114) located at the end wall (111) is greater than a thickness of the first nickel-plated layer (114) located at the sidewall (112).

7. The secondary battery (100) of claim 6, wherein the secondary battery (100) meets at least one of the conditions:
a thickness (c) of the first nickel-plated layer (114) located at the end wall (111) is c, and a thickness (d) of the first nickel-plated layer (114) located at the sidewall (112) is d, wherein 1 < c/d < 3;
wherein the thickness (c) of the first nickel-plated layer (114) located at the end wall (111) is in a range of 4 *µ*m to 5 *µ*m, and the thickness (d) of the first nickel-plated layer (114) located at the sidewall (112) is in a range of 2 *µ*m to 4 *µ*m; and
wherein an insulating member (150) isolating the end wall (111) and the electrode assembly (120) is disposed between the end wall (111) and the electrode assembly (120), a second nickel-plated layer (115) is disposed at an inner side of the housing (110), and a thickness of the second nickel-plated layer (115) located at the end wall (111) is greater than a thickness of the second nickel-plated layer (115) located at the sidewall (112).

8. The secondary battery (100) of claim 7, wherein a thickness (e) of the second nickel-plated layer (115) located at the end wall (111) is e, and a thickness (f) of the second nickel-plated layer (115) located at the sidewall (112) is f, wherein 1 < e/f< 3.

9. The secondary battery (100) of claim 8, wherein the thickness (e) of the second nickel-plated layer (115) located at the end wall (111) is in a range of 2 *µ*m to 3 *µ*m, and the thickness (f) of the second nickel-plated layer (115) located at the sidewall (112) is in a range of 1 *µ*m to 2 *µ*m.

10. The secondary battery (100) of claim 9, wherein along a same thickness direction of the housing (110), the thickness of the first nickel-plated layer (114) is greater than the thickness of the second nickel-plated layer (115).

11. The secondary battery (100) of claim 1, wherein the end wall (111) and the sidewall (112) are connected via a transition portion (116), the transition portion (116) comprises a first rounded corner (1161) connected to an outer surface of the end wall (111) and an outer surface of the sidewall (112) and a second rounded corner (1162) connected to an inner surface of the end wall (111) and an inner surface of the sidewall (112), a radius of the first rounded corner (1161) is r1, and a radius of the second rounded corner (1162) is r2, wherein r1/a≥1, r2/a≥1.

12. The secondary battery (100) of claim 11, wherein 0.8≤(r1-r2)/a≤0.95; and/or
wherein the transition portion (116) is gradually stretched along an axial direction of the sidewall (112) from an inner surface of the end wall (111) facing an inside of the housing (110) to be equal to a wall thickness of the sidewall (112), and a stretching height (h) of the transition portion (116) is h, wherein 0.5≤r1/h≤1.

13. The secondary battery (100) of claim 12, wherein 1 mm≤r1≤1.5 mm, 1 mm≤h≤2 mm.

14. The secondary battery (100) of claim 12, wherein the electrode assembly (120) comprises a layered body (126) formed by layering a positive electrode sheet (121), a negative electrode sheet (123), and a separator (122), the positive electrode sheet (121) comprises a first coating region (1212) coated with a positive electrode active material and a first uncoated region (1213) not coated with the positive electrode active material, the negative electrode sheet (123) comprises a second coating region (1232) coated with a negative electrode active material and a second uncoated region (1233) not coated with the negative electrode active material, along an axial direction of the electrode assembly (120), the electrode assembly (120) comprises a reaction region (127) and two non-reaction regions (128) respectively located at two sides of the reaction region (127), the reaction region (127) is a portion in which the first coating region (1212) and the second coating region (1232) are overlapped along a radial direction of the electrode assembly (120), the non-reaction regions (128) are portions in which only the first coating region (1212) or only the second coating region (1232) is present, and a distance from a boundary line between the non-reaction regions (128) and the reaction region (127) close to a side of the end wall (111) to an inner side of the end wall (111) is g, wherein g≥h.

15. A battery pack (10), **characterized in that** the battery pack (10) comprising the secondary battery (100) of any one of claims 1 to 14.
